# EUROPEAN PATENT APPLICATION

(11) **EP 4 203 183 A1**
(43) Date of publication of application: **28.06.2023**
(21) Application number: 22197720.0
(22) Date of filing: 26.09.2022
(51) Int. Cl.: H01Q 1/36, H01Q 1/32, H01Q 21/00, H01Q 21/06, H01Q 21/08

(54) **METAL ANTENNA ASSEMBLY WITH INTEGRATED FEATURES**

(30) Priority: 23.12.2021 US 202117645796
(71) Applicant: Aptiv Technologies Limited, St. Michael (BB)
(72) Inventor: Brandenburg, Scott D., Kokomo, 46902 (US); Zimmermann, David Wayne, Noblesville, 46062 (US); Hudson, Mark William, Russiaville, 46979 (US); Macfarland, Sophie, Carmel, 46032 (US); Nohns, Dennis C., Kokomo, 46901 (US)
(74) Representative: Manitz Finsterwald Patent- und Rechtsanwaltspartnerschaft mbB

(57) **Abstract**

This document describes techniques, apparatuses, and systems of a metal antenna assembly with integrated features. The described antenna assembly comprises an antenna structure including an antenna body having at least one antenna element formed from a metal alloy while in a thixotropic state. The antenna structure includes a surface having a corrosion inhibitor coating. The antenna assembly further includes an air-waveguide structure. In implementations, the antenna structure is configured to attach to a mounting. The antenna structure includes at least one integrated alignment feature promoting alignment during manufacturing of the antenna assembly. The antenna structure further includes an internal portion in the antenna body defining an integrated heatsink portion and an integrated electromagnetic interference portion within which circuit components can reside. In aspects, using the at least one integrated alignment feature, multiple antenna elements can be assembled or stacked together to form an antenna assembly with complex waveguide patterns.

## Description

### BACKGROUND

Radar systems play a critical role in many applications, such as in the realms of defense and security, transportation, and so forth. Automobiles are increasingly utilizing radar systems to assist or perform driving operations. These radar systems enable automobiles to detect objects, determine position and movement, and perform appropriate driving operations to safely avoid or drive amongst the detected objects. In many situations, an automobile performing driving operations using imprecise radar data may cause the automobile to operate unsafely or uncomfortably, at least partially diminishing a passenger's experience. Due to its significance in ensuring safety, radar data needs to be precise, and obtained using cost-effective and reliable components for interfacing with a wide variety of vehicle systems and designs. Existing manufacturing techniques are not adequate at supporting, large-scale, cost-effective production of, often millimeter-sized, components with a degree of precision in their physical features to facilitate high-quality electromagnetic transmissions for enabling sophisticated radar techniques.

### SUMMARY

This document describes techniques, apparatuses, and systems of a metal antenna assembly with integrated features. The described antenna assembly includes an antenna structure including an antenna body having at least one antenna element formed from a metal alloy when in a thixotropic state. The antenna structure includes a surface of the antenna body having a corrosion inhibitor coating effective to stabilize a surface chemistry of the metal alloy. The antenna assembly further includes at least one air-waveguide structure. The air-waveguide structure can be an integrated conductive pathway filled with air configured to propagate electromagnetic signals through the antenna body. In some implementations, the antenna structure is configured to attach to a mounting surface over and around which one or more circuit components are arranged. The antenna structure can include an integrated alignment feature promoting alignment of separate parts of the antenna structure during manufacturing or assembly. The antenna structure can include an internal portion in the antenna body defining an integrated heatsink portion and an integrated electromagnetic interference portion within which circuit components can reside. In aspects, using the at least one integrated alignment feature, multiple antenna elements can be assembled or stacked together to form an antenna assembly with complex waveguide patterns. In these and other ways that are clear from this disclosure, the described apparatuses and techniques can implement complex asymmetrical features with precise physical dimensions and avoid high production costs associated with manufacturing antenna elements.

This document also describes methods for manufacturing the above-summarized metal antenna assemblies with integrated features. For example, one method includes forming a single-element antenna assembly from a metal alloy and applying a corrosion inhibitor coating effective to stabilize a surface chemistry of the metal alloy. The method may create a single-element antenna assembly having an antenna structure providing integrated features. In another example, one method includes forming a multi-element antenna assembly from a metal alloy and applying a corrosion inhibitor coating effective to stabilize a surface chemistry of the metal alloy, as well as operations to implement a multi-element antenna assembly having an antenna structure providing integrated features.

This Summary introduces simplified concepts related to a metal antenna assembly with integrated features, which are further described below in the Detailed Description and Drawings. This Summary is not intended to identify essential features of the claimed subject matter, nor is it intended for use in determining the scope of the claimed subject matter.

### BRIEF DESCRIPTION OF THE DRAWINGS

The details of one or more aspects of a metal antenna assembly with integrated features are described in this document with reference to the following figures. The same numbers are often used throughout the drawings to reference like features and components:
FIG. 1 illustrates an example implementation of a single-element metal antenna assembly with integrated features;
FIG. 2 illustrates an example implementation of a multi-element magnesium antenna assembly with integrated features having two antenna elements;
FIG. 3 illustrates an example implementation of a multi-element magnesium antenna assembly with integrated features having three antenna elements;
FIG. 4 illustrates an example implementation of a multi-element magnesium antenna assembly with integrated features, including an internal portion defining an integrated heatsink portion and an integrated electromagnetic interference portion;
FIG. 5 illustrates an example implementation of a multi-element magnesium antenna assembly with integrated features, including integrated alignment features;
FIG. 6 depicts an example method for manufacturing a single-element magnesium antenna assembly with integrated features;
FIG. 7 depicts an example method for forming a single-element antenna body in accordance with some implementations;
FIG. 8 depicts another example method for manufacturing a multi-element magnesium antenna assembly with integrated features; and
FIG. 9 depicts an example method for forming a multi-element antenna body in accordance with some implementations.

### DETAILED DESCRIPTION

### OVERVIEW

A radar system may use an antenna assembly to transmit and receive electromagnetic energy and/or signals. The output from the radar system includes radar data, which indicates information inferred from return signals received as reflections of their corresponding transmissions. Some radar systems utilize antenna assemblies having multiple antenna elements to provide increased gain and directivity over what can be achieved using a single antenna element. Antenna elements may include a structure, referred to as a waveguide, to guide electromagnetic waves and transfer electromagnetic energy to and from one or more antenna elements. Waveguides minimize energy loss by restricting the transmission of energy to one wavelength or frequency and discarding energy of other wavelengths or frequencies. These waveguides are generally hollow, defining a channel filled with a dielectric, which in many cases is air. As air waveguides, they can be arranged in a pattern to provide the desired phasing, combining, or splitting of signals and energy. A conductive channel on the surface of or through these waveguide antenna elements can be used as conduit to capture electromagnetic energy that is in one wavelength or frequency and filter or discard electromagnetic energy that is outside those parameters.

To develop an effective air-waveguide and, by extension an effective radar system, the surfaces of an air-waveguide structure (e.g., the walls of the air channel) are implemented as having or being composed of a conductive material (e.g., copper, aluminum). In this way, electromagnetic waves can conduct through the air-waveguide structure. To achieve this, antenna elements of the radar system having the air-waveguide structure are often manufactured using metalworking techniques; for example, antenna elements are manufactured using stamped metal. However, due to a combination of factors, including inherent disadvantages associated with particular metal manufacturing techniques, the workability of a selected metal, the electrical and physical properties of a metal, an environment to which an antenna element may be subjected to, and so forth, radar elements are often elected to be manufactured using plastic manufacturing techniques. This is largely due to plastic manufacturing techniques more reliably producing "true-to-form" products with intricate features. For example, metal stamping is generally a sub-optimal manufacturing technique by which to achieve complex asymmetrical features on a small product. Therefore, a plastic injection molding technique may be employed, instead, to achieve these precise dimensions even with complex features on a small product.

Yet, manufacturing antenna elements composed of plastic often requires additional steps to make the air-waveguide conductive. For instance, surfaces defined by an air waveguide may be made conductive via a metallization process (e.g., vacuum metalizing, electroplating plastic), by being plated with metal, by being coated with a conductive coating (e.g., chemical plating, deposition, painting), or made conductive using any of a variety of techniques (e.g., laser cutting the plastic to a conductive layer) to facilitate electromagnetic transmission. These additional manufacturing steps increase time, labor and material cost, design complexity, and so forth. It is therefore desirable to minimize the production cost associated with manufacturing an antenna having precise physical properties and features.

To this end, it is desirable to manufacture antenna elements of radar systems possessing numerous physical properties (e.g., low porosity, low tolerance, lightweight, high hardness), influencing and achieving several electromagnetic properties. For example, an antenna element having a high porosity may reduce electromagnetic signal integrity and render coupling to a circuit board sub-optimal. Due to these various physical properties, most metal manufacturing techniques and metalworking techniques are incompatible to produce antenna elements designed having complex asymmetrical features, since many techniques fail to achieve precise true-to-form values. For example, many metal manufacturing techniques are incapable of producing products with linear tolerances of plus or minus 0.001 inches having a draft of 0.5 degrees or less, and walls as thin as 0.02 inches. In addition, techniques to manufacture antenna elements composed of plastic often require additional steps to make one or more surfaces conductive. As such, existing manufacturing techniques are not cost-effective, particularly to support large-scale production, in producing inexpensive antenna components with sufficiently precise physical properties and features that enable high-quality electromagnetic transmissions. This can be important to expand adoption of these advanced safety systems into more classes of vehicles, which may provide safer driving for not only luxury vehicles that are accustomed to such features, but also inexpensive vehicle classes, to enable most if not all vehicles to operate safely.

This document describes techniques, apparatuses, and systems of a metal antenna assembly with integrated features. The described antenna assembly comprises an antenna structure including an antenna body having at least one antenna element. The antenna element is formed from a metal alloy while in a thixotropic state. The antenna structure includes a surface of the antenna body having a corrosion inhibitor coating effective to stabilize a surface chemistry of the metal alloy. The antenna assembly further includes at least one air-waveguide structure. The air-waveguide structure can be an integrated conductive pathway filled with air configured to propagate electromagnetic signals through the antenna body. In implementations, the antenna structure is configured to attach to a mounting surface over and around one or more circuit components. The antenna structure includes at least one integrated alignment feature promoting alignment of separate parts of the antenna structure during manufacturing of the antenna assembly. The antenna structure further includes an internal portion in the antenna body defining an integrated heatsink portion and an integrated electromagnetic interference portion within which circuit components can reside. In aspects, using the at least one integrated alignment feature, multiple antenna elements can be assembled or stacked together to form an antenna assembly with complex waveguide patterns. In this way, the described apparatuses and techniques can implement complex asymmetrical features with precise physical dimensions and avoid high production costs associated with manufacturing antenna elements.

This is just one example of the described techniques, apparatuses, and systems of a metal antenna assembly with integrated features. This document describes other examples and implementations.

### EXAMPLE APPARATUSES

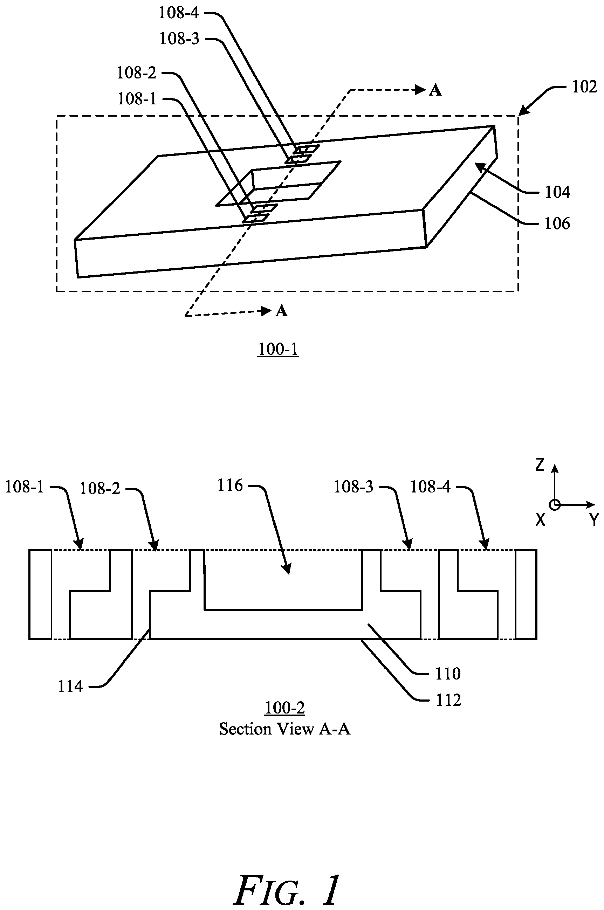

FIG. 1 illustrates an example implementation 100 of a metal antenna assembly with integrated features (antenna assembly 102) having one antenna element 104. For ease of description, a magnesium alloy is described herein as an example metal implementation. Further described herein, an antenna assembly includes at least one antenna element. Some details of the antenna element 104 are illustrated in a detail view 100-1 as section view A-A 100-2. As shown, the antenna element 104 includes an antenna structure 106 and an air-waveguide structure 108 (e.g., air-waveguide structure 108-1, air-waveguide structure 108-2, air-waveguide structure 108-3, air-waveguide structure 108-4). The antenna structure 106 provides an overall shape of the antenna element 104 within the antenna assembly 102.

The antenna structure 106 includes an antenna body 110 and a surface of the antenna body 110 (surface 112). The antenna body 110 can be formed as any of a variety of polyhedral shapes (e.g., a cylinder, a rectangular prism) and composed of any of a variety of magnesium alloys effective to conduct electromagnetic signals and/or energy. In an implementation, the antenna body 110 is formed with a magnesium alloy using existing magnesium molding techniques (e.g., working with metal in a thixotropic state, such as one technique referred to as Thixomolding^{™}). While thixotropic manufacturing techniques have been tried in the past (e.g., in the 1980s), even for radar, this process involved manufacturing a reflective antenna element without any consideration in electromagnetic energy transmissions, or without any consideration for thermal dissipation and/or shielding and isolation. Therefore, thixotropic-based modeling techniques are being applied to radar in a different and completely new way from what was tried before. That is, the described techniques that are somewhat based on existing thixotropic molding techniques, have never been considered or tried, or even recognized as an option for improving manufacturability and performance of waveguides, heatsinks, radiation cages, or other conductive antenna assembly components for high fidelity radar applications.

As an example, magnesium alloy chips may be heated to a thixotropic state (e.g., semi-molten). The thixotropic magnesium alloy may have a low but stable viscosity. The thixotropic magnesium alloy may then be injected into a die cavity at high pressure and speed, creating a laminar flow into the die cavity. Through such a technique, the antenna body 110 of the antenna assembly 102, can be formed with a magnesium alloy having a surface with low drafts and porosity levels (e.g., 50 percent lower than products produced by die-casting techniques). In addition, the antenna body 100 may possess true-to-form values (e.g., tight tolerances), high stiffness, and high ductility. Further, through such a magnesium manufacturing technique, complex and asymmetrical features can be implemented on or in an antenna element (e.g., antenna element 104), such as the air-waveguide structure 108.

The air-waveguide structure 108 can be an integrated conductive pathway formed as part of the antenna structure 106 (e.g., during injection into the die cavity), having a conductive surface 114. The air-waveguide structure 108 can provide the conductive pathway filled with a dielectric, such as air, for propagating the electromagnetic signals and/or energy in various manners to provide a desired phasing and combining/splitting of signals for different reception and transmission patterns. In implementations, air is the dielectric for the air-waveguide structure 108, and the walls of the integrated conductive pathway are conductive (conductive surface 114). For example, the air-waveguide structure 108 can be a portion of the surface 112 defining an integrated conductive pathway for propagating electromagnetic signals. As illustrated in FIG. 1, the waveguide structure 108 includes four pathways (air-waveguide structure 108-1, air-waveguide structure 108-2, air-waveguide structure 108-3, and air-waveguide structure 108-4) through the antenna body 110. Although described primarily as using air as a dielectric, other dielectrics can be used depending on the application, desired electromagnetic characteristics, and environmental conditions that the antenna assembly may be exposed to.

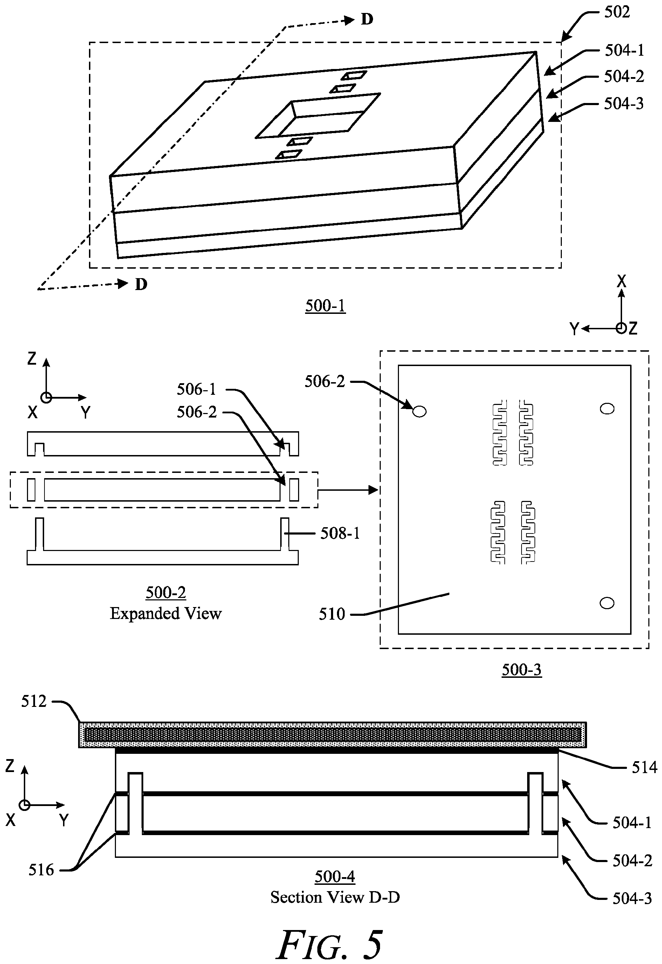

As described herein, integrated features are features that can be implemented in a single manufacturing step during which an antenna element is formed. For example, an integrated feature can be implemented as part of the antenna structure during injection molding of the antenna element 104. In this way, features, including the air-waveguide structure 108, do not need to be added to the antenna structure 106 during a later manufacturing stage through additional manufacturing steps, such as metalworking (e.g., metal forming, stamping), metallization, laser-cutting, and so forth. In alternative implementations, the air-waveguide structure 108 can be added after the antenna structure 106 is formed, such as by cutting or etching the antenna structure 106. That is, the antenna structure 106 may be formed from two parts, separated by a zero or near-zero gap, and joined together as a single component. Additional details of example techniques for forming the antenna structure 106 and the air-waveguide structure 108 are described with reference to FIGs. 5, 6, 7, and 8.

In implementations (not shown in FIG. 1), after formation of the antenna structure 106, the antenna structure 106 is coated with a corrosion inhibitor coating (e.g., a protective layer). The corrosion inhibitor coating chemically stabilizes the surface chemistry of the magnesium alloy on the surface 112 to produce a stable unreactive surface 112 resistant to potential corrosion in a selected environment. For example, the antenna structure 106 is coated with an Alodine 5900^{™} conversion coating, effective to convert a chemistry of a magnesium alloy to a stable unreactive byproduct. In other examples, the antenna structure 106 is coated with an organic surface preservative. The organic surface preservative may provide a thin, uniform, non-tacky film capable of maintaining the integrity of the magnesium alloy surface 112. In implementations, the entire antenna structure 106 may be coated with the corrosion inhibitor coating.

The corrosion inhibitor coating may be applied using any of a variety of techniques, such as dipping or painting. The corrosion inhibitor may, in implementations, further include or provide a conductive coating to increase the electromagnetic energy output of the antenna assembly 102 (e.g., increase transmission power), which may enable the antenna assembly 102 to be used in lower-loss applications or applications that require additional power.

In implementations, the antenna structure 106 includes an internal portion 116 as an integrated feature. Further to the above descriptions, multiple antenna elements (e.g., antenna element 104) may be joined to form a larger antenna assembly (e.g., a layered stack or array) of antenna elements that are electrically connected to each other. A multi-element antenna assembly can provide increased gain and directivity compared to an antenna assembly with a single antenna element. For example, a multi-element antenna assembly can include two or more antenna elements.

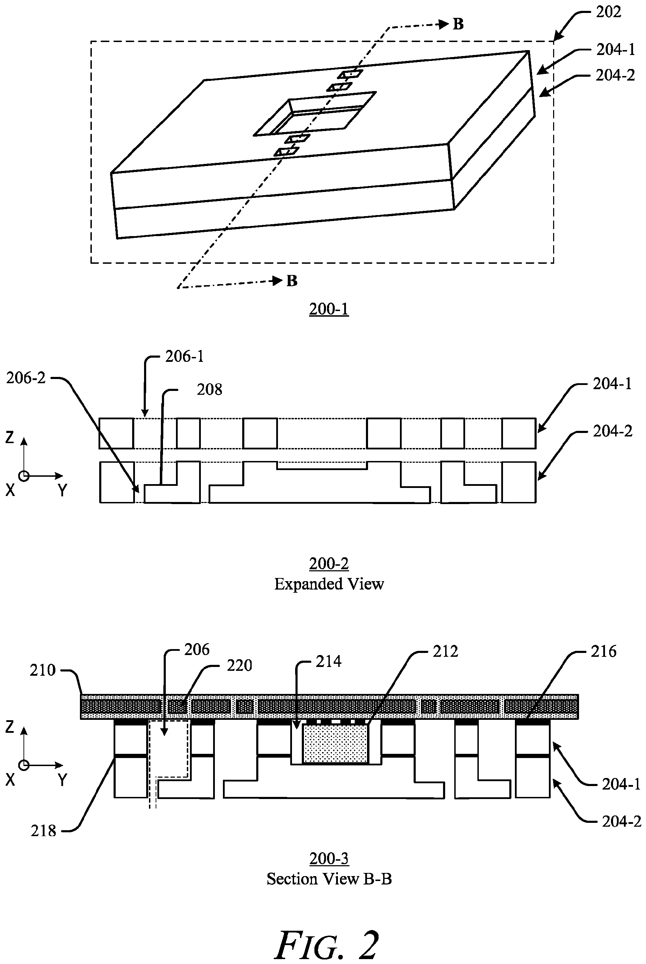

Consider FIG. 2, which illustrates another example implementation 200 of a magnesium antenna assembly with integrated features (antenna assembly 202). As illustrated, the antenna assembly 202 includes two antenna elements 204 (e.g., antenna element 204-1, antenna element 204-2). While two antenna elements 204 are shown, in other examples, a magnesium antenna assembly such as this may include three or more antenna elements 204.

As shown in the detail view 200-1, the antenna assembly 202 includes two antenna elements 204, which are electrically connected to each other. For example, the antenna elements 204 may be electrically connected to each other using a conductive adhesive (not shown). In other cases, all, or part of the antenna elements 204 may be coated with a solderable material (e.g., nickel, tin, silver, gold) and soldered together. In still other cases, or in addition thereto, the antenna elements 204 may be joined together using one or more integrated alignment features, including a mating of pins to holes and/or a pin-locking mechanism. Each of the antenna elements 204-1, 204-2, and 204-3 include an antenna structure (not labeled in the detail view 200-1) contributing to an antenna structure of the antenna assembly 202. The antenna structure provides the overall shape of the antenna assembly 202 and can also provide electromagnetic shielding or isolation for various components that produce and use electromagnetic signals or energy transmitted and received by the antenna assembly 202 (e.g., as described with reference to the antenna structure 106 of FIG. 1). For example, the antenna assembly 202 can be attached to a mounting surface, such as a printed circuit board, and, thereby, shield electronic components on the mounting surface from ambient electromagnetic interference (EMI). The surface of the antenna body may be configured to couple to a ground plane of, for example, a printed circuit board, when attached over and around one or more circuit components. The antenna structure includes a body and a surface (not labeled). The body can be made from a magnesium alloy, and the surface can be coated with a corrosion inhibitor coating (e.g., similar to the antenna body 110 and the surface 112 as described with reference to FIG. 1).

A detailed view 200-2 illustrates the antenna assembly 202, which includes two antenna elements 204 as an expanded view (not to scale). For clarity in the detail view 200-2, the antenna elements 204 are shown separated (spaced apart), and some components of the antenna assembly 202 may be omitted or unlabeled.

As illustrated in the expanded view 200-2, one or more of the antenna elements 204-1 and 204-2 may further include an air-waveguide structure (e.g., air-waveguide structure 206-1, air-waveguide structure 206-2) contributing to an air-waveguide structure 206 of the antenna assembly 202. The air-waveguide structure 206 provides the conductive pathway filled with a dielectric, such as air, for propagating the electromagnetic signals or energy in various manners to implement different reception and transmission patterns or support shielding or isolation. The air-waveguide structure 206 can be a portion of the antenna assembly 202. The air-waveguide structures 206-1 and 206-2can vary in size, direction, location, and number for each of the respective antenna elements 204. For example, as illustrated in expanded view 200-2, the antenna element 204-1 includes an air-waveguide structure having four conductive pathways, including air-waveguide structure 206-1. The antenna element 204-2 includes an air-waveguide structure having four conductive pathways, including air-waveguide structure 206-2 2 with an additional conductive surface208. The conductive surface 208 may form a portion of a conductive pathway for the air-waveguide structure 206-2 through the antenna assembly 202 (e.g., a portion of an air-waveguide) when the antenna elements 204-1 and 204-2 are assembled together. These are only a few examples of configurations and arrangements of the air-waveguide structure 206.

In some implementations, the antenna elements 204 joined together forming the antenna assembly 202 may be attached to a mounting surface of a substrate, such as a printed circuit board along with other components. The substrate may be operably coupled to an integrated circuit (IC) component (e.g., a monolithic microwave integrated circuit (MMIC)) that can drive or control the electromagnetic energy or signals. The term "coupled" may refer to two or more elements in contact with each other (e.g., physically, electrically, magnetically, optically, etc.) or to two or more elements that are not in direct contact with each other, but still cooperate and/or interact with each other. Another detail view 200-3 illustrates the antenna assembly 202 attached to a mounting surface 210 of a substrate, such as a printed circuit board.

As shown in detail view 200-3, the antenna structure further includes an internal portion 214 in the antenna body (e.g., in antenna element 204-1 and antenna element 204-2) within which the IC component 212 resides. The internal portion 214 may be implemented as part of the antenna structure during injection molding of the antenna element 104. The internal portion 214 can, in alternative implementations, be implemented in the antenna structure during a later manufacturing stage. Further, the internal portion 214 may be implemented anywhere on the antenna structure. One or more faces of the IC component 212 residing within the internal portion 214 may contact one or more walls of the internal portion 214. For example, as illustrated in detail view 200-3 (antenna assembly 202 as section view B-B), a face of the IC component 212 opposite of the mounting surface may contact a wall of the internal portion 214 parallel to the face of the IC component 212.

The mounting surface 210 and the antenna assembly 202 may be attached to each other by an electrically connective layer 216. Similarly, the antenna elements 204 may be electrically connected to each other through other electrically connective layers 218. The electrically connective layer 216 and the electrically connective layers 218 may be, for example, a solder layer (e.g., a lower-temperature solder for a reflow or other process), a conductive adhesive (e.g., a conductive epoxy), or a silver sinter layer. In some implementations, the mounting surface 210 also includes one or more radio frequency (RF) ports 220. In the detail view 200-3, there are four RF ports 220 (only one is labeled). The RF ports 220 may be aligned, at least partially, with an air-waveguide structure (e.g., air-waveguide structure 206-1) of an antenna element (e.g., antenna element 204-1) layered nearest to the mounting surface 210. The RF ports 220, in some implementations, may be coaxial with an air-waveguide structure 206. In implementations, the conductive surface 208 may angle the conductive pathway of the air-waveguide structure 206 in various directions throughout the antenna body. In further implementations, a portion of the mounting surface 210 can form another conductive surface (not labeled) of the air-waveguide structure 206. In such a configuration, the antenna assembly 202 includes multiple layers of material, including antenna elements, joined in a layered stack and electrically connected to each other configured to form the air-waveguide structure 206.

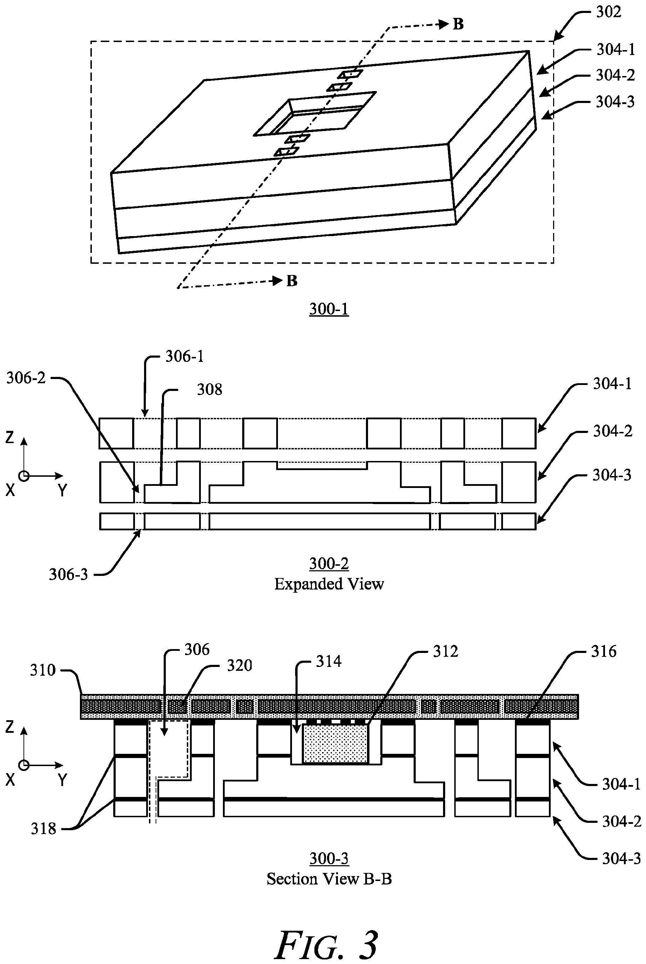

Consider FIG. 3, which illustrates another example implementation 300 of a magnesium antenna assembly with integrated features (antenna assembly 302). As illustrated, the antenna assembly 302 includes three antenna elements 304 (e.g., antenna element 304-1, antenna element 304-2, antenna element 304-3).

As shown in the detail view 300-1, the antenna assembly 302 includes three antenna elements 304, which are electrically connected to each other. For example, the antenna elements 304 may be electrically connected to each other using a conductive adhesive (not shown). In other cases, all, or part of the antenna elements 304 may be coated with a solderable material (e.g., nickel, tin, silver, gold) and soldered together. In still other cases, or in addition thereto, the antenna elements 304 may be joined together using one or more integrated alignment features, including a mating of pins to holes and/or a pin-locking mechanism. Each of the antenna elements 304-1, 304-2, and 304-3 include an antenna structure (not labeled in the detail view 300-1) contributing to an antenna structure of the antenna assembly 302. The antenna structure provides the overall shape of the antenna assembly 302 and can also provide electromagnetic shielding or isolation for various components that produce and use electromagnetic signals or energy transmitted and received by the antenna assembly 302 (e.g., as described with reference to the antenna structure 106 of FIG. 1). For example, the antenna assembly 302 can be attached to a mounting surface, such as a printed circuit board, and, thereby, shield electronic components on the mounting surface from ambient electromagnetic interference (EMI). The surface of the antenna body may be configured to couple to a ground plane of, for example, a printed circuit board, when attached over and around one or more circuit components. The antenna structure includes a body and a surface (not labeled). The body can be made from a magnesium alloy, and the surface can be coated with a corrosion inhibitor coating (e.g., similar to the antenna body 110 and the surface 112 as described with reference to FIG. 1).

A detailed view 300-2 illustrates the antenna assembly 302, which includes three antenna elements 304 as an expanded view (not to scale). For clarity in the detail view 300-2, the antenna elements 304 are shown separated (spaced apart), and some components of the antenna assembly 302 may be omitted or unlabeled.

As illustrated in the expanded view 300-2, one or more of the antenna elements 304-1, 304-2, and 304-3 may further include an air-waveguide structure (e.g., air-waveguide structure 306-1, air-waveguide structure 306-2, air-waveguide structure 306-3) contributing to an air-waveguide structure 306 of the antenna assembly 302. The air-waveguide structure 306 provides the conductive pathway filled with a dielectric, such as air, for propagating the electromagnetic signals or energy in various manners to implement different reception and transmission patterns or support shielding or isolation. The air-waveguide structure 306 can be a portion of the antenna assembly 302. The air-waveguide structures 306-1, 306-2, and 306-3 can vary in size, direction, location, and number for each of the respective antenna elements 304.

For example, as illustrated in expanded view 300-2, the antenna element 304-1 includes an air-waveguide structure having four conductive pathways, including air-waveguide structure 306-1. The antenna element 304-2 includes an air-waveguide structure having four conductive pathways, including air-waveguide structure 306-2 with an additional conductive surface 308. The antenna element 304-3 includes an air-waveguide structure having four conductive pathways, including air-waveguide structure 306-3. The conductive surface 308 may form a portion of a conductive pathway for the air-waveguide structure 306-2 through the antenna assembly 202 (e.g., a portion of an air-waveguide) when the antenna elements 304-1, 304-2, and 304-3 are assembled together. These are only a few examples of configurations and arrangements of the air-waveguide structure 306.

In some implementations, the antenna elements 304 joined together forming the antenna assembly 302 may be attached to a mounting surface of a substrate, such as a printed circuit board along with other components. The substrate may be operably coupled to an integrated circuit (IC) component (e.g., a monolithic microwave integrated circuit (MMIC)) that can drive or control the electromagnetic energy or signals. The term "coupled" may refer to two or more elements in contact with each other (e.g., physically, electrically, magnetically, optically, etc.) or to two or more elements that are not in direct contact with each other, but still cooperate and/or interact with each other. Another detail view 200-3 illustrates the antenna assembly 302 attached to a mounting surface 310 of a substrate, such as a printed circuit board.

As shown in detail view 300-3, the antenna structure further includes an internal portion 314 in the antenna body (e.g., in antenna element 304-1 and antenna element 304-2) within which the IC component 312 resides. The internal portion 314 may be implemented as part of the antenna structure during injection molding of the antenna element 104. The internal portion 314 can, in alternative implementations, be implemented in the antenna structure during a later manufacturing stage. Further, the internal portion 314 may be implemented anywhere on the antenna structure. One or more faces of the IC component 312 residing within the internal portion 314 may contact one or more walls of the internal portion 314. For example, as illustrated in detail view 300-3 (antenna assembly 302 as section view B-B), a face of the IC component 312 opposite of the mounting surface may contact a wall of the internal portion 314 parallel to the face of the IC component 312.

The mounting surface 310 and the antenna assembly 302 may be attached to each other by an electrically connective layer 316. Similarly, the antenna elements 304 may be electrically connected to each other through other electrically connective layers 318. The electrically connective layer 316 and the electrically connective layers 318 may be, for example, a solder layer (e.g., a lower-temperature solder for a reflow or other process), a conductive adhesive (e.g., a conductive epoxy), or a silver sinter layer. In some implementations, the mounting surface 310 also includes one or more radio frequency (RF) ports 320. In the detail view 300-3, there are four RF ports 320 (only one is labeled). The RF ports 320 are aligned, at least partially, with an air-waveguide structure (e.g., air-waveguide structure 306-1) of an antenna element (e.g., antenna element 304-1) layered nearest to the mounting surface 310. The RF ports 320, in some implementations, may be coaxial with an air-waveguide structure 306. In implementations, conductive surfaces (e.g., conductive surface 308-1, conductive surface 308-2) may angle the conductive pathway of the air-waveguide structure 306 in various directions throughout the antenna body. In further implementations, a portion of the mounting surface 310 can form a conductive surface of the air-waveguide structure 306. In such a configuration, the antenna assembly 302 includes multiple layers of material, including antenna elements, joined in a layered stack, and electrically connected to each other configured to form an air-waveguide structure, including air-waveguide structure 306.

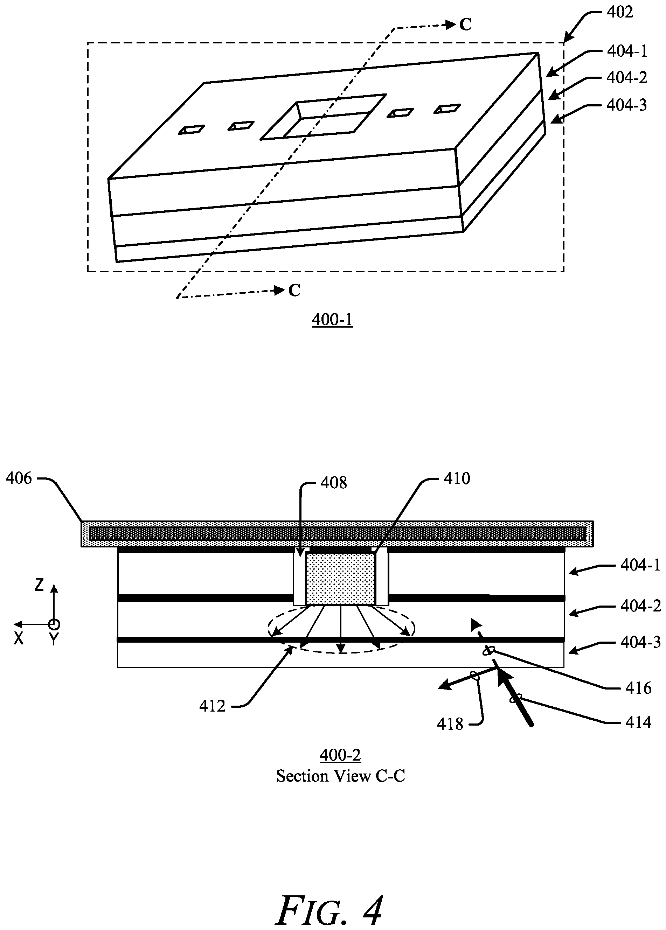

FIG. 4 illustrates an example implementation 400 of a magnesium antenna assembly with integrated features (antenna assembly 402) containing similar features to the antenna assembly 202 of FIG. 2. With respect to the FIG. 2 illustration of the antenna assembly 202, the antenna assembly 402, as illustrated in detail views 400-1 and 400-2, is rotated clockwise by 90 degrees about the Z-axis. Further, for the sake of clarity and conciseness, some components of the antenna assembly 402, such as conductive pathways of an air-waveguide structure (e.g., air-waveguide structure 206), are omitted or unlabeled.

As shown in the detail view 400-1, the antenna assembly 402 includes three antenna elements 404 (e.g., antenna element 404-1, antenna element 404-2, antenna element 404-3), which are electrically connected to each other. For example, the antenna elements 204 may be electrically connected to each other using a conductive adhesive (not shown). In other cases, all, or parts of the antenna elements 404 may be coated with a solderable material (e.g., nickel, tin, silver, gold) and soldered together. Each of the antenna elements 404 may include an antenna structure (not labeled in the detail view 400-1) contributing to an antenna structure and overall shape of the antenna assembly 402. The antenna structure includes an antenna body and an antenna surface (not labeled in the detail view 400-1).

Detail view 400-2 depicts the antenna assembly 402 as a section view C-C (not to scale). As shown in detail view 400-2, the antenna structure can be attached to a mounting surface 406, providing electromagnetic shielding or isolation for various components on the mounting surface 406 that produce and use electromagnetic signals and/or energy transmitted and received by the antenna assembly 402. The antenna structure further includes an internal portion 408 in the antenna body. In some implementations, the antenna assembly 402 is attached to the mounting surface 406 having an IC component 410 (e.g., a MMIC). The IC component 410, operably coupled to the mounting surface 406, resides in the internal portion 408.

In aspects, the antenna structure including the internal portion 408 in the antenna body defines an integrated heatsink portion for promoting thermal dissipation from the IC component 410. One or more faces of the IC component 410 may contact walls of the integrated heatsink portions. For example, as illustrated in detail view 400-2, a face of the IC component 410 opposite of the mounting surface 406 may contact a wall of the integrated heatsink portion parallel to the face of the IC component 410. As a result, during radar operations using the antenna assembly 402, the IC component 410 may generate heat. The thermal difference between the IC component 410 and the wall of the integrated heatsink portion may cause heat transfer via thermal conduction. Detail view 400-2 illustrates an IC component 410 transferring heat 412 into the antenna body.

The walls of the integrated heatsink portion being integral to the magnesium alloy antenna body, in contrast to walls implemented via metallic plating, coating, and the such, minimize the number of thermal conductive resistances between the IC component 410 and the antenna surface exposed to an external environment. In addition, the walls of the integrated heatsink portion being integral to the magnesium alloy antenna body, in comparison to a plastic antenna body, provide high thermal conductivity. As a result, the integrated heatsink portion can maximize heat rejection, improving the performance of a radar module (e.g., IC component 410 and associated components) in higher-temperature environments.

In some implementations, a thermally conductive gel (not shown), such as a thermally conductive epoxy adhesive, may be applied to either the face of the IC component 410 opposite of the mounting surface or to the wall of the integrated heatsink portion parallel to the face of the IC component 410. In still other implementations, the thermally conductive gel may fill the integrated heatsink portion such that one or more surfaces of the IC component 410 are wetted with the thermally conductive gel. In so doing, the thermally conductive gel may fill in otherwise thermally insulative air gaps to maximize heat transfer efficiency. As a result, heat can be transferred from the adjacent conducting mediums (e.g., the IC component 410, the thermally conductive gel, the magnesium alloy antenna body), promoting heat rejection and maintaining an operable temperature of the mounting surface 406.

In further aspects, the antenna structure including the internal portion 408 in the antenna body defines an integrated EMI portion for shielding and isolating the IC component 410 from unwanted (e.g., external and radiating) electromagnetic signals. The antenna body, being composed of the magnesium alloy, can prevent the transmission of electromagnetic signals and energy to and from the IC component 410. As illustrated in detail view 400-2, external electromagnetic signals, or energy 414 irradiate(s) the antenna assembly 402. In an aspect, the antenna body, being composed of the magnesium alloy, is configured to reduce the transmission 416 of the external electromagnetic signals or energy 414. In another aspect, the antenna body is configured to reflect 418 external electromagnetic signals or energy 414. In so doing, the IC component 410 in the integrated EMI portion can be shielded from external electromagnetic signals or energy 414. In another aspect, the integrated EMI portion can isolate the IC component 410 from radiating electromagnetic signals or energy to the external environment.

Further to the above descriptions, the integrated EMI portion can be implemented in the antenna structure without additional manufacturing steps. For example, some manufacturing steps involve implementing shielding surfaces (e.g., barriers) made of conductive or magnetic materials (e.g., metal plating, applying coating) to the walls of the internal portion 214. Instead, the integrated EMI portion can be implemented as part of the antenna structure during injection molding of an antenna element (e.g., antenna element 204-1).

In still further implementations, the antenna structure may include more than one internal portion in the antenna body designed to define multiple integrated heatsink portions and integrated EMI portions.

FIG. 5 illustrates an example implementation 500 of a magnesium antenna assembly with integrated features (antenna assembly 502) containing similar features to the antenna assembly 202 of FIG. 2. For the sake of clarity and conciseness, some components of the antenna assembly 502 are omitted or unlabeled.

As shown in the detail view 500-1, the antenna assembly 502 includes three antenna elements 504 (e.g., antenna element 504-1, antenna element 504-2, antenna element 504-3), which are electrically connected to each other. Each of the antenna elements 504 may include an antenna structure (not labeled) contributing to an antenna structure and overall shape of the antenna assembly 502. The antenna structure includes an antenna body and an antenna surface (not labeled in the detail view 500-1).

Each of the antenna elements 504 may include one or more of an integrated alignment feature. In implementations, the integrated alignment features include coaxial holes and pins. In other implementations, the integrated alignment features include slots, interlocking pieces, a pin-locking mechanism, and so forth. Some details of the antenna elements 504 and the integrated alignment features are illustrated in an expanded view 500-2. As illustrated in expanded view 500-2, antenna element 504-1 includes at least two holes 506-1 and antenna element 504-2 includes at least two holes 506-2. Further illustrated, the holes 506-1 of antenna element 504-1 are blind holes, while the holes of antenna element 504-2 through holes 506-2. Antenna element 504-3 includes at least two pins 508-1. The antenna elements 504 may include any combination of the integrated alignment features in varying locations.

Detail view 500-3 illustrates a perspective view of antenna element 504-2 on the X-Y plane. As illustrated, antenna element 504-2 includes three integrated alignment features, including three holes 506-2 (e.g., three through holes). The antenna element 504-2 further includes a waveguide structure 510.

Detail view 500-4 (the antenna assembly 502 as section view D-D) illustrates the antenna elements 504 joined together to form a multi-element antenna assembly (antenna assembly 502). The antenna assembly 502 and a mounting surface 512 are attached to each other by an electrically connective layer 514. Similarly, the antenna elements 504 are electrically connected to each other through other electrically connective layers 516. The electrically connective layer 514 and electrically connective layers 516 may be a conductive adhesive. In other cases, or some combination thereof, the electrically connective layer 514 and electrically connective layers 516 are a layer of solder including a solderable material (e.g., nickel, tin, silver, gold). In still other cases, or in addition thereto, the antenna elements 504 may be joined together using integrated alignment features. For example, detail view 500-4 illustrates pins inserted into holes, mating the antenna elements 504, in addition to the electrically connective layer 514 and electrically connective layers 516.

Such integrated alignment features are often difficult to implement using metal manufacturing techniques, due to the high precision and low draft values necessary. Using the magnesium manufacturing technique as described herein, however, antenna elements 504 can implement precise integrated alignment features.

### EXAMPLE METHODS

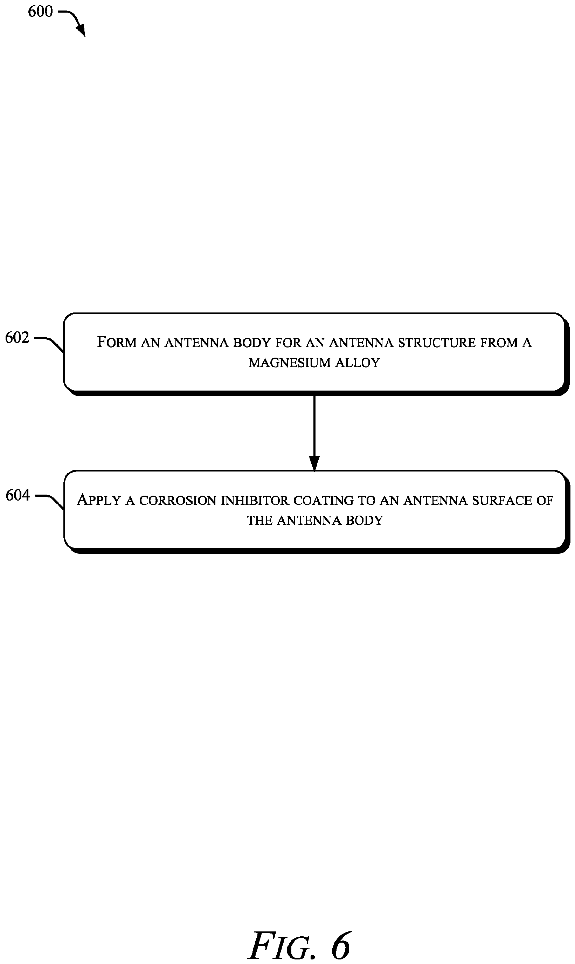

FIG. 6 depicts an example method 600 of manufacturing a magnesium antenna assembly with integrated features. The example method 600 is shown as sets of operations (or acts) performed, but not necessarily limited to the order or combinations in which the operations are shown herein. Further, any of one or more of the operations may be repeated, combined, or reorganized to provide other methods. In portions of the following discussion, reference may be made to the antenna assembly 102 of FIG. 1 and to entities detailed in FIG. 2, FIG. 3, and FIG. 4, reference to which is made only for example. The techniques are not limited to performance by one entity or multiple entities.

FIG. 6 depicts an example method 600 for manufacturing a single-element antenna assembly for a radar system. Notably, the example method 600 only depicts act 602 and act 604. In comparison to other example methods for manufacturing an antenna assembly for a radar system, the example method 600 enacts less operations to produce an effective antenna assembly, which translates into material and labor cost savings. As an example, some methods for manufacturing an antenna assembly involve additional acts of metalworking, laser cutting, and/or metallization.

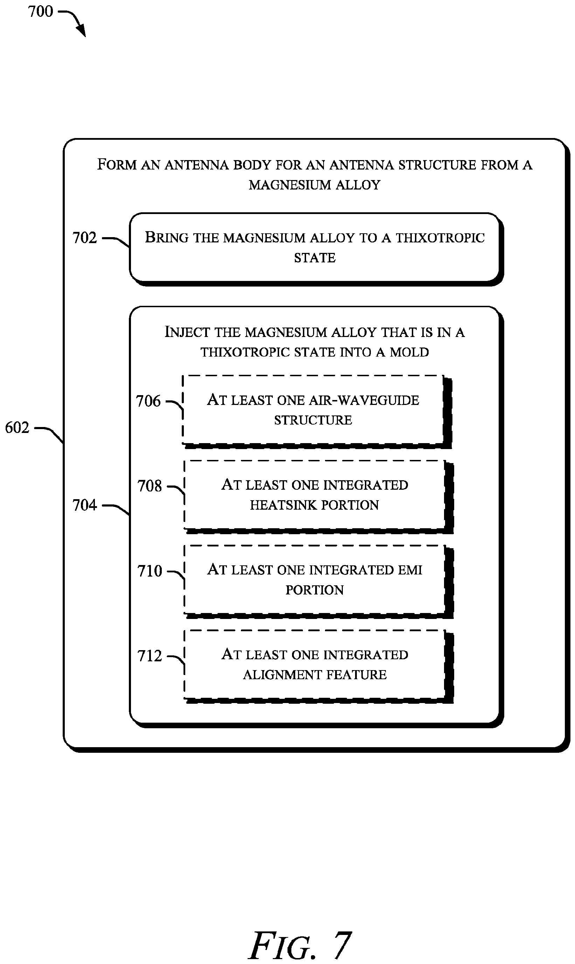

In contrast, at 602, an antenna body for an antenna structure may be sufficiently formed from a magnesium alloy in a single operation. Turning momentarily to FIG. 7, at act 602, forming an antenna body for an antenna structure from a magnesium alloy may involve, at act 702, bringing (e.g., by heating, by cooling) the magnesium to a thixotropic state and, at act 704, injecting the magnesium alloy that is in a thixotropic state into a mold. As an example, magnesium alloy chips may be heated to a thixotropic state (e.g., semi-molten state) and injected into a die cavity at a high pressure and speed, creating a laminar flow into the die cavity. Through such a magnesium manufacturing technique, complex and asymmetrical features, including integrated features, can be implemented on or in the antenna element.

In alternative implementations, not illustrated, an antenna body for an antenna structure can be formed from any of a variety of metals, including aluminum alloys, in a thixotropic state. In addition, at least portions, including an antenna element, of an antenna body for an antenna structure may be formed using any combination of metal manufacturing techniques, such as metal casting, additive manufacturing processes (e.g., three-dimensional printing), metal injection molding, and metalworking techniques. Any of the metal manufacturing techniques and metalworking techniques may be used before, during, or after the antenna body, or a portion thereof, is in a thixotropic state.

Integrated features may include one or more of: (i) at act 706, an air-waveguide structure; (ii) at act 708 and act 710, an internal portion; and/or (iii) at act 712, an integrated alignment feature. For example, during injection of the thixotropic magnesium alloy into the die cavity, the air-waveguide structure can be formed as a portion of the surface defining an integrated conductive pathway. In another example, during injection of the thixotropic magnesium alloy into the die cavity, the antenna structure can further include an internal portion defining an integrated heatsink portion and integrated EMI portion. In yet another example, during injection of the thixotropic magnesium alloy into the die cavity, the antenna structure can further include an integrated alignment feature effective to facilitate alignment during manufacturing. As described herein, these integrated features are features that can be implemented in a single manufacturing step during which an antenna element is formed (e.g., act 602).

Turning back to FIG. 6, at 604, at least a portion of the antenna surface may be coated with a corrosion inhibitor coating. In aspects, after formation of the antenna structure, the antenna structure is coated with a corrosion inhibitor coating, configured to protect the antenna surface. In implementations, the corrosion inhibitor coating chemically stabilizes the magnesium alloy on the surface. The conversion of the surface chemistry of the magnesium alloy may produce a stable unreactive surface resistant to potential corrosion in a selected environment. In further implementations, all surfaces of the antenna element may be coated with the corrosion inhibitor coating.

The corrosion inhibitor coating may be applied using any of a variety of techniques, such as dipping or painting. The corrosion inhibitor may, in implementations, further include or provide a conductive coating to increase the electromagnetic energy output of the antenna assembly, which may enable the antenna assembly 102 to be used in lower-loss applications or applications that require additional power.

Optionally, the single-element antenna assembly can then be attached to a mounting surface of a substrate, such as a printed circuit board, during integration of the antenna assembly. The single-element antenna assembly may be attached to the mounting surface via an electrically connective layer. The electrically connective layer may be, for example, a solder layer (e.g., a lower-temperature solder for a reflow or other process), a conductive adhesive (e.g., a conductive epoxy), or a silver sinter layer. The electrically connective layer may attach portions of the mounting surface to the antenna element. In other implementations, the single-element antenna assembly may be attached to the mounting surface via the one or more integrated alignment features. In an implementation, the single-element antenna assembly may be attached using both integrated alignment features and the electrically connective layer.

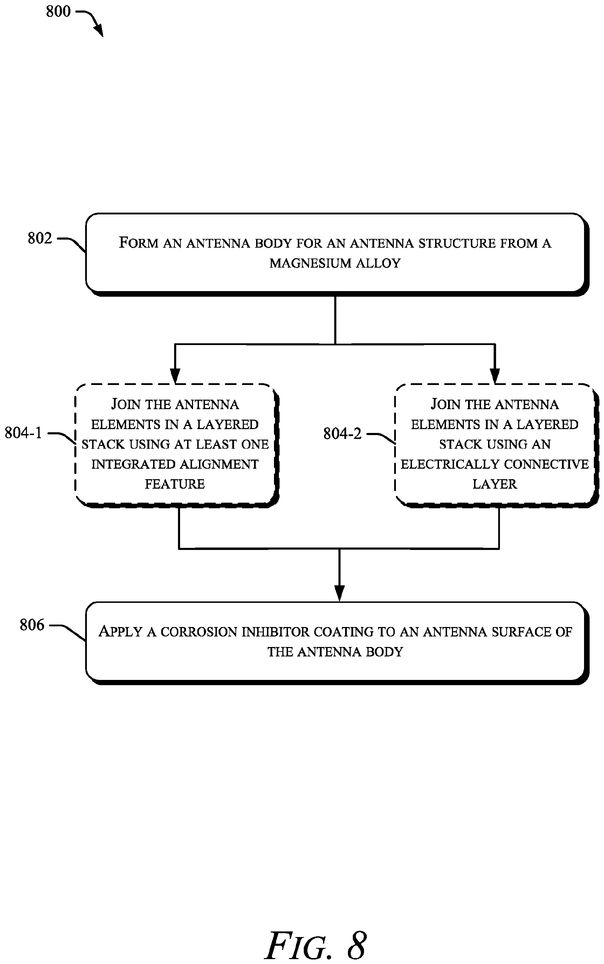

FIG. 8 depicts an example method 800 for manufacturing a multi-element antenna assembly for a radar system. Notably, the example method 800 only depicts act 802, act 804, and act 806. In comparison to other example methods for manufacturing an antenna assembly for a radar system, the example method 800 enacts less operations to produce an effective antenna assembly, which translates into material and labor cost savings. As an example, some methods for manufacturing an antenna assembly involve additional acts of metalworking, laser cutting, and/or metallization.

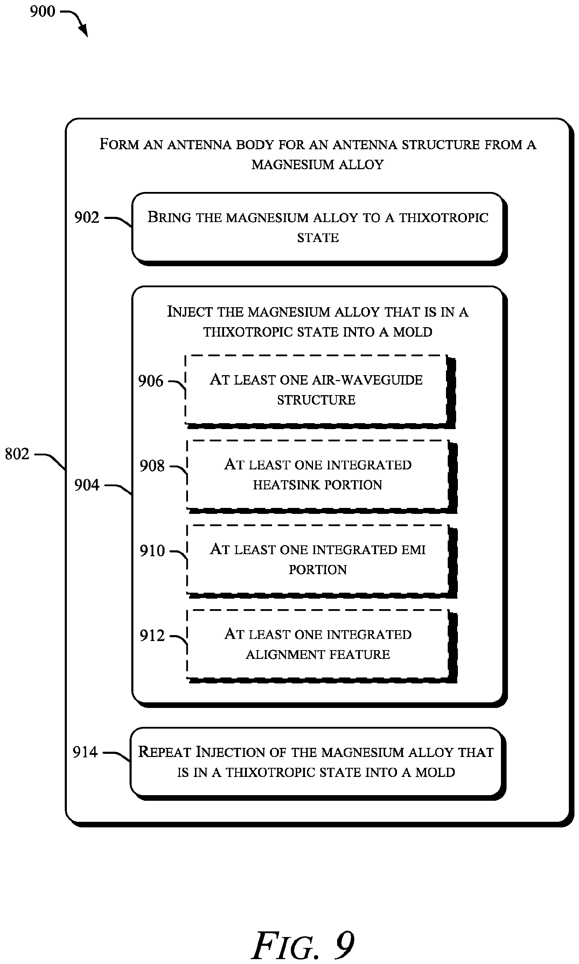

In contrast, at 802, an antenna body for an antenna structure may be sufficiently formed from a magnesium alloy in a single operation. Turning momentarily to FIG. 9, at act 802, forming an antenna body for an antenna structure from a magnesium alloy may involve method 900 including, at act 902, bringing (e.g., by heating, by cooling) the magnesium to a thixotropic state, and, at act 904, injecting the magnesium alloy that is in a thixotropic state into a mold. As an example, magnesium alloy chips may be heated to a thixotropic state (e.g., semi-molten) and injected into a die cavity at a high pressure and speed, creating a laminar flow into the die cavity. Through such a magnesium manufacturing technique, complex and asymmetrical features, including integrated features, can be implemented on or in the antenna element.

Integrated features may include one or more of: (i) at act 906, an air-waveguide structure; (ii) at act 908 and act 910, an internal portion; and/or (iii) at act 912, an integrated alignment feature. For example, during injection of the thixotropic magnesium alloy into the die cavity, the air-waveguide structure can be formed as a portion of the surface defining an integrated conductive pathway. In another example, during injection of the thixotropic magnesium alloy into the die cavity, the antenna structure can further include an internal portion defining an integrated heatsink portion and integrated EMI portion. In yet another example, during injection of the thixotropic magnesium alloy into the die cavity, the antenna structure can further include an integrated alignment feature effective to facilitate alignment during manufacturing.

At act 914, injection of the magnesium alloy that is in a thixotropic state into a mold may be repeated. The injection of the thixotropic magnesium alloy may be repeated multiple times. For example, to produce a multi-element antenna assembly having three antenna elements, the injection into a mold may be repeated thrice. In an implementation, the repetition of the injection may occur concurrently. In other implementations, the repetition of the injection may occur sequentially, injection into a mold one after another.

Turning back to FIG. 8, at 804, the antenna elements may be joined in a layered stack. In an implementation, at act 804-1, the antenna elements may be joined in a layered stack using at least one integrated alignment feature, including a mating of pins to holes, a pin-locking mechanism, and so forth. The integrated alignment features may assist in aligning the multiple antenna elements during manufacturing. In another implementation, at act 804-2, the antenna elements may be joined in a layered stack using an electrically connective layer. The electrically connective is applied to at least portions of mating, planar surfaces of each of the multiple antenna elements. The electrically connective layer may be, for example, a solder layer (e.g., a lower-temperature solder for a reflow or other process), a conductive adhesive (e.g., a conductive epoxy), or a silver sinter layer. The electrically connective layer may be applied via dipping, painting, or such. The electrically connective layer is effective to both physically, and electrically, connect the layers of the antenna assembly. The electrically connective layer may further support heat conduction through the antenna body. In still further implementations, the antenna elements may be joined using both at least one integrated alignment feature and the electrically connective layer.

At act 806, at least a portion of the antenna surface may be coated with a corrosion inhibitor coating. In aspects, after formation of the antenna structure, the antenna structure is coated with a corrosion inhibitor coating, configured to protect the antenna surface. In implementations, the corrosion inhibitor coating chemically stabilizes the magnesium alloy on the surface. The conversion of the surface chemistry of the magnesium alloy may produce a stable unreactive surface resistant to potential corrosion in a selected environment. In further implementations, all surfaces of the antenna element may be coated with the corrosion inhibitor coating.

The corrosion inhibitor coating may be applied using any of a variety of techniques, such as dipping or painting. The corrosion inhibitor may, in implementations, further include or provide a conductive coating to increase the electromagnetic energy output of the antenna assembly, which may enable the antenna assembly 102 to be used in lower-loss applications or applications that require additional power.

Optionally, the multi-element antenna assembly can then be attached to a mounting surface of a substrate, such as a printed circuit board, during integration of the antenna assembly. The multi-element antenna assembly may be attached to the mounting surface via an electrically connective layer. The electrically connective layer may be, for example, a solder layer (e.g., a lower-temperature solder for a reflow or other process), a conductive adhesive (e.g., a conductive epoxy), or a silver sinter layer. The electrically connective layer may attach portions of the mounting surface to the antenna element. In other implementations, the multi-element antenna assembly may be attached to the mounting surface via the one or more integrated alignment features. In an implementation, the single-element antenna assembly may be attached using both integrated alignment features and the electrically connective layer.

### EXAMPLES

The following section includes some additional examples of a magnesium antenna assembly with integrated features.

Example 1: An antenna assembly, comprising: an antenna structure, the antenna structure including: an antenna body having an antenna element formed from a metal alloy in a thixotropic state; and a surface of the antenna body comprising a corrosion inhibitor coating, the corrosion inhibitor coating effective to stabilize a surface chemistry of the metal alloy to provide a stable unreactive surface; and an air-waveguide structure, the air-waveguide structure comprising an integrated conductive pathway filled with air configured to propagate electromagnetic signals through the antenna body.

Example 2: The antenna assembly of any previous example, wherein the antenna structure is configured to attach to a mounting surface over and around which one or more circuit components are arranged, the antenna structure further including at least one of: an integrated heatsink portion of the antenna body that promotes thermal dissipation from the one or more circuit components; or an integrated electromagnetic interference (EMI) portion of the antenna body that shields and inhibits the one or more circuit components from unwanted electromagnetic signals.

Example 3: The antenna assembly of any previous example, wherein the antenna structure comprises at least one of the integrated heatsink portion and at least one of the integrated EMI portion.

Example 4: The antenna assembly of any previous example, wherein the mounting surface comprises a surface of a printed circuit board and the surface of the antenna body configured to couple to a ground plane of the printed circuit board when attached over and around the one or more circuit components.

Example 5: The antenna assembly of any previous example, wherein the antenna structure further comprises: at least one integrated alignment feature, the integrated alignment feature promoting alignment of separate parts of the antenna structure during manufacturing of the antenna assembly.

Example 6: The antenna assembly of any previous example, wherein the integrated alignment feature is defined by a hole in the antenna structure, the hole being a cylindrical hole effective to fit an inserted pin.

Example 7: The antenna assembly of any previous example, wherein the integrated alignment feature promotes alignment of the antenna structure to a mounting surface during integration of the antenna assembly, the integrated alignment feature being on the surface of the antenna body.

Example 8: The antenna assembly of any previous example, wherein the corrosion inhibitor coating maintains a high electrical conductivity of the antenna.

Example 9: The antenna assembly of any previous example, wherein the corrosion inhibitor coating is applied to the antenna structure via dip coating.

Example 10: The antenna assembly of any previous example, wherein the antenna assembly further comprises multiple layers of material, the multiple layers of material being joined in a layered stack and electrically connected to each other.

Example 11: The antenna assembly of any previous example, wherein the antenna assembly comprising: a first layer of the multiple layers of material for defining a first part of the air-waveguide structure; and a second layer of the multiple layers of material for defining a conductive pathway.

Example 12: The antenna assembly of any previous example, wherein the antenna assembly comprising multiple antenna elements includes multiple air-waveguide structures.

Example 13: A method, comprising: manufacturing, from a metal alloy in a thixotropic state, an antenna structure having integrated features, the method comprising: forming an antenna body for the antenna structure from a metal alloy that is in a thixotropic state; and applying, to an antenna surface of the antenna body, a corrosion inhibitor coating effective to stabilize a surface chemistry of the metal alloy to provide a stable unreactive surface.

Example 14: The method of any previous example, further comprising: attaching a single-element antenna assembly to a mounting surface comprising a printed circuit board.

Example 15: The method of example 13, wherein forming the antenna body comprises: heating the metal alloy to the thixotropic state; and injecting the metal alloy that is in the thixotropic state into a mold.

Example 16: The method of any previous example, wherein injecting, the metal alloy that is in the thixotropic state, into a mold is effective to form one or more of the integrated features into the antenna structure, the integrated features comprising: at least one air-waveguide structure, the air-waveguide structure comprising an integrated conductive pathway filled with air for propagating electromagnetic signals through the antenna body; at least one integrated heatsink portion of the antenna body that promotes thermal dissipation from the one or more circuit components; at least one integrated electromagnetic interference (EMI) portion of the antenna body that shields and inhibits the one or more circuit components from unwanted electromagnetic signals; or at least one integrated alignment feature, the at least one integrated alignment feature promoting alignment of separate parts of the antenna structure during manufacturing of the antenna assembly.

Example 17: The method of any previous example, wherein forming the antenna body further comprises: repeating injection of the metal alloy that is in the thixotropic state into a mold effective to produce multiple antenna elements; and applying an electrically connective layer to at least portions of mating, planar surfaces of each of the antenna elements.

Example 18: The method of any previous example, wherein forming the antenna body further comprises: joining the antenna elements in a layered stack using at least one integrated alignment feature; or joining the antenna elements in a layered stack using the electrically connective layer.

Example 19: The method of any previous example, further comprising: attaching a multi-element antenna assembly to a mounting surface comprising a printed circuit board.

Example 20: A system for an automobile comprising: an antenna system for a sensor device on the automobile, the antenna system including an antenna assembly, comprising: an antenna structure, the antenna structure including: an antenna body having an antenna element formed from a metal alloy when the metal alloy is in a thixotropic state; and a surface of the antenna body comprising a corrosion inhibitor coating, the corrosion inhibitor coating effective to stabilize a surface chemistry of the metal alloy to provide a stable unreactive surface; and an air-waveguide structure, the air-waveguide structure comprising an integrated conductive pathway filled with air for propagating electromagnetic signals through the antenna body.

### CONCLUSION

While various embodiments of the disclosure are described in the foregoing description and shown in the drawings, it is to be understood that this disclosure is not limited thereto but may be variously embodied to practice within the scope of the following claims. From the foregoing description, it will be apparent that various changes may be made without departing from the scope of the disclosure as defined by the following claims. In addition to waveguides, heatsinks, and EM cages for use in radar or other electromagnetic and/or electrical system, the techniques of the foregoing description can be adapted and applied to other problems to form small components requiring similar tolerances or features as components of the examples described herein.

The use of "or" and grammatically related terms indicates non-exclusive alternatives without limitation unless the context clearly dictates otherwise. As used herein, a phrase referring to "at least one of' a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

## Claims

1. An antenna assembly, comprising:
an antenna structure, the antenna structure including:
an antenna body having an antenna element formed from a metal alloy in a thixotropic state; and
a surface of the antenna body comprising a corrosion inhibitor coating, the corrosion inhibitor coating effective to stabilize a surface chemistry of the metal alloy to provide a stable unreactive surface; and
an air-waveguide structure, the air-waveguide structure comprising an integrated conductive pathway filled with air configured to propagate electromagnetic signals through the antenna body.

2. The antenna assembly of claim 1, wherein the antenna structure is configured to attach to a mounting surface over and around which one or more circuit components are arranged, the antenna structure further including at least one of:
an integrated heatsink portion of the antenna body that promotes thermal dissipation from the one or more circuit components; or
an integrated electromagnetic interference (EMI) portion of the antenna body that shields and inhibits the one or more circuit components from unwanted electromagnetic signals.

3. The antenna assembly of claim 2, wherein the antenna structure comprises at least one of the integrated heatsink portion and at least one of the integrated EMI portion.

4. The antenna assembly of claim 2 or claim 3, wherein the mounting surface comprises a surface of a printed circuit board and the surface of the antenna body configured to couple to a ground plane of the printed circuit board when attached over and around the one or more circuit components.

5. The antenna assembly of any one of the preceding claims, wherein the antenna structure further comprises:
at least one integrated alignment feature, the integrated alignment feature promoting alignment of separate parts of the antenna structure during manufacturing of the antenna assembly.

6. The antenna assembly of claim 5, wherein the at least one integrated alignment feature is defined by a hole in the antenna structure, the hole being a cylindrical hole effective to fit an inserted pin.

7. The antenna assembly of claim 5 or 6, wherein the at least one integrated alignment feature promotes alignment of the antenna structure to a mounting surface during integration of the antenna assembly, the at least one integrated alignment feature being on the surface of the antenna body.

8. The antenna assembly of any one of the preceding claims, wherein the corrosion inhibitor coating maintains a high electrical conductivity of the antenna.

9. The antenna assembly of claim 8, wherein the corrosion inhibitor coating is applied to the antenna structure via dip coating.

10. The antenna assembly of any one of the preceding claims, wherein the antenna assembly further comprises multiple layers of material, the multiple layers of material being joined in a layered stack and electrically connected to each other.

11. The antenna assembly of claim 10, wherein the antenna assembly further comprises:
a first layer of the multiple layers of material for defining a first part of the air-waveguide structure; and
a second layer of the multiple layers of material for defining a conductive pathway.

12. The antenna assembly of claim 11, wherein the antenna assembly comprising multiple antenna elements includes multiple air-waveguide structures.

13. A method comprising:
manufacturing, from a metal alloy in a thixotropic state, an antenna structure having integrated features by:
forming an antenna body for the antenna structure from a metal alloy that is in a thixotropic state; and
applying, to an antenna surface of the antenna body, a corrosion inhibitor coating effective to stabilize a surface chemistry of the metal alloy to provide a stable unreactive surface; and
attaching a single-element antenna assembly to a mounting surface comprising a printed circuit board.

14. The method of claim 13, wherein forming the antenna body comprises:
heating the metal alloy to the thixotropic state; and
injecting the metal alloy that is in the thixotropic state into a mold to form one or more of the integrated features into the antenna structure, the integrated features comprising:
at least one air-waveguide structure, the air-waveguide structure comprising an integrated conductive pathway filled with air for propagating electromagnetic signals through the antenna body;
at least one integrated heatsink portion of the antenna body that promotes thermal dissipation from one or more circuit components;
at least one integrated electromagnetic interference (EMI) portion of the antenna body that shields and inhibits the one or more circuit components from unwanted electromagnetic signals; or
at least one integrated alignment feature, the at least one integrated alignment feature promoting alignment of separate parts of the antenna structure during manufacturing of the antenna structure.

15. The method of claim 14, wherein forming the antenna body further comprises:
repeating injection of the metal alloy that is in the thixotropic state into a mold effective to produce multiple antenna elements; and
applying an electrically connective layer to at least portions of mating, planar surfaces of each of the antenna elements.
